# EUROPÄISCHE PATENTSCHRIFT

(11) **EP 1 020 400 B1**
(45) Veröffentlichungstag und Bekanntmachung des Hinweises auf die Patenterteilung: **26.03.2003**
(21) Anmeldenummer: 99122278.7
(22) Anmeldetag: 09.11.1999
(51) Int. Cl.: C01B 3/32

(54) **Vorrichtung zur Kombination zweier heterogen katalysierter Reaktionen**
Device for the combination of two heterogeneous catalytic reactions
Dispositif pour combiner deux reactions catalysées hétérogènes

(30) Priorität: 15.01.1999 DE 19901301
(43) Veröffentlichungstag der Anmeldung: 19.07.2000
(73) Patentinhaber: Ballard Power Systems AG, 73230 Kirchheim / Teck-Nabern (DE)
(72) Erfinder: Heil, Dietmar, 88477 Schwendi (DE); Lamla, Oskar, 73266 Bissingen a.d.Teck (DE); Schüssler, Martin, 89073 Ulm (DE); Zur Megede, Detlef, Dr., 73230 Kirchheim/Teck (DE)
(74) Vertreter: Beyer, Andreas, Dr.

(56) Entgegenhaltungen:
- EP-A- 0 798 798
- US-A- 4 822 521
- PATENT ABSTRACTS OF JAPAN vol. 013, no. 466 (C-646), 20. Oktober 1989 (1989-10-20) & JP 01 183401 A (HITACHI LTD), 21. Juli 1989 (1989-07-21)
- PATENT ABSTRACTS OF JAPAN vol. 1996, no. 04, 30. April 1996 (1996-04-30) & JP 07 335238 A (MITSUBISHI ELECTRIC CORP), 22. Dezember 1995 (1995-12-22)
- PATENT ABSTRACTS OF JAPAN vol. 015, no. 297 (C-0854), 29. Juli 1991 (1991-07-29) & JP 03 109202 A (NGK INSULATORS LTD), 9. Mai 1991 (1991-05-09)

## Beschreibung

Die vorliegende Erfindung betrifft eine Vorrichtung zur Durchführung einer katalytischen endothermen Reaktion und einer damit thermisch gekoppelten katalytischen exothermen Reaktion, insbesondere einer Reformierung oder partiellen Oxidation von Methanol und einer daran anschließenden CO-Oxidation.

Die Gewinnung von Wasserstoff aus Methanol und Wasser basiert auf der Gesamtreaktion CH₃OH + H₂O → CO₂ + 3H₂. Zur Durchführung dieser Reaktion wird in der Praxis ein den Kohlenwasserstoff und Wasserdampf umfassendes Reaktionsgemisch unter Zufuhr von Wärme an einem geeigneten Katalysator entlanggeleitet, um in einem zwei- oder mehrstufigen Reaktionsablauf den gewünschten Wasserstoff zu erzeugen. Eine derartige Vorrichtung zur zweistufigen Methanol-Reformierung ist aus der EP 0 687 648 A1 bekannt. Dabei gibt es verschiedene Möglichkeiten, die endotherme Reformierung von Kohlenwasserstoffen zu Wasserstoff mit der nötigen Reaktionswärme zu versorgen. Eine Möglichkeit, wie sie beispielsweise aus der JP 4-325401 A (Patents Abstracts of Japan, C-1042, 30. März 1993, Band 17, Nr. 162) bekannt ist, besteht in der Kopplung an einen räumlich getrennt ablaufenden exothermen Prozeß. In der bekannten Anordnung wird das Reaktionsgemisch in einem Reaktor einer ersten Reformierung unterzogen und danach einem Reformer zur Restreformierung zugeleitet. Das Produktgas wird wieder durch den in Art eines Wärmetauschers aufgebauten Reaktor geleitet, wobei eine teilweise CO-Oxidation stattfindet, die einen exothermen Prozeß darstellt. Die bei diesem Prozeß entstehende Wärme wird über die wärmetauscherartige Anordnung der ebenfalls in dem Reaktor stattfindenden Reformierung zugeleitet.

Des weiteren ist bekannt, dem Reformierungsbereich eines Reaktors Luft derart zuzuleiten, daß sich eine sogenannte autotherme Reformierung (ATR) einstellt.

In der deutschen Patentanmeldung DE 197 43 673 A1 ist ein zur Durchführung einer autothermen Reformierung geeignetes Reaktorkonzept beschrieben, bei dem der Reaktor aus einer Mehrzahl von Katalysatorschichten aufgebaut ist (Stapelreaktor), die jeweils durch Verpressen von Katalysatormaterial in eine dünne und großflächige, stark komprimierte Schicht gebildet sind. Die einzelnen Schichten weisen Kanäle zum Leiten von Edukten des Reaktionsgemisches und der Reaktionsprodukte auf, wobei eine Zuführung von Sauerstoff getrennt von den übrigen Edukten erfolgt.

Aus der GB 2 217 728 A ist eine Vorrichtung zur Durchführung einer endothermen Reformierung und einer daran anschließenden CO-Oxidation des bei der endothermen Reaktion anfallenden Zwischenproduktgases bekannt. Bei der bekannten Vorrichtung wird die bei der CO-Oxidation entstandene Wärme zum Teil auf die Reformierungsreaktion und zum Teil auf den Reformierungskatalysator übertragen, um die Spitzentemperatur in der Vorrichtung zu reduzieren.

Aus dem Patent Abstract of Japan, vol. 15, PN 03 109 202 ist außerdem ein Reformierungsreaktor in Form eines Honigwabenkörpers bekannt, bei dem in benachbarten Kanälen des Honigwabenkörpers jeweils ein Reformierungskatalysator zur Umsetzung eines gasförmigen Kraftstoffes beziehungsweise ein Oxidationskatalysator zur Verbrennung eines weiteren Gases vorgesehen ist, so dass die Reformierungsreaktion durch die Oxidationsreaktion beheizt wird. Ausgehend hiervon liegt der Erfindung die Aufgabe zugrunde, eine Vorrichtung der eingangs genannten Art vorzuschlagen, bei der die bei einem exothermen Prozeß wie der CO-Oxidation anfallende Wärme möglichst effektiv für die endotherme Reformierung verwendet wird. Insbesondere soll mit der bereitzustellenden Vorrichtung eine möglichst kompakte und kostengünstige Ausführung für die mobile Anwendung der Wasserstofferzeugung in Kraftfahrzeugen ermöglicht werden.

Zur Lösung dieser Aufgabe wird eine Vorrichtung zur Kombination zweier heterogen katalysierter Reaktionen mit den Merkmalen des Anspruches 1 vorgeschlagen. Die erfindungsgemäße Vorrichtung umfaßt demnach mindestens eine dünne und poröse Katalysatorschicht, die von dem die Reaktionsedukte umfassenden Reaktionsgemisch (Reaktanten der endothermen Reaktion) im wesentlichen senkrecht unter Druckabfall durchströmt wird. In der Katalysatorschicht ist mindestens ein Zufuhrkanal für ein gasförmiges Oxidationsmittel zur Durchführung einer exothermen Reaktion mit einem Zwischenproduktgas der endothermen Reaktion im Innern der Katalysatorschicht vorgesehen. Des weiteren ist in der Katalysatorschicht mindestens ein Sammelkanal für das gasförmige Endprodukt angeordnet. Im Unterschied zu den bekannten Wasserstoffreaktoren wird demnach erfindungsgemäß in einem katalytisches Material enthaltenden Schichtkörper sowohl eine an sich endotherme katalysierte Reaktion durchgeführt als auch ein exothermer Prozeß, dessen Abwärme durch den durch die erfindungsgemäße Anordnung gewährleisteten nahtlosen Übergang zwischen den Bereichen der endothermen Reaktion und der exothermen Reaktion zur Ausgleich der Wärmebilanz der katalysierten Reaktion dient. Dadurch erfolgt eine besonders effektive Nutzung der Abwärme des exothermen Prozesses, so daß ein in der Summe im wesentlichen autothermer Prozeß erhalten wird. Insbesondere beim Kaltstart der erfindungsgemäßen Vorrichtung ist so ein schnelles Erreichen der Betriebstemperatur der H2-Erzeugung und der CO-Oxidation gewährleistet. Die Erfindung ermöglicht des weiteren eine besonders kompakte und kostengünstige Ausgestaltung einer für die mobile Anwendung im Kraftfahrzeugbereich vorgesehenen Vorrichtung zur Methanol-Reformierung. Die durch die Erfindung mögliche kompakte Bauweise läßt sich vorteilhafterweise unter Verwendung von Katalysatorschichten, wie sie aus der bereits erwähnten deutschen Patentanmeldung mit dem Aktenzeichen 197 43 673.0 bekannt sind, erreichen.

In Ausgestaltung der Erfindung ist der mindestens eine Zufuhrkanal für Oxidationsmittel in Durchströmungsrichtung gesehen etwa in der Mitte der Katalysatorschicht angeordnet. Somit durchströmt das Reaktionsgemisch die Katalysatorschicht im wesentlichen senkrecht unter Bildung eines Zwischenproduktgases. Etwa in der Mitte der Katalysatorschicht erfolgt dann eine Zufuhr des gasförmigen Oxidationsmittels, das mit dem Zwischenproduktgas eine exotherme Reaktion durchführt. Dadurch bilden sich in der Katalysatorschicht zwei Bereiche aus, nämlich ein in Durchströmungsrichtung gesehen erster Bereich für die endotherme Reaktion und ein in Durchströmungsrichtung daran anschließender zweiter Bereich für die exotherme Reaktion, wobei beide Bereiche thermisch gekoppelt sind, so daß die Abwärme des exothermen Prozesses aus dem zweiten Bereich in den ersten Bereich abgeleitet und dort der endothermen Reaktion zugeführt wird. Wesentlich für die Erfindung ist daher die Verwendung einer Katalysatorschicht mit hoher innerer Wärmeleitfähigkeit.

In weiterer Ausgestaltung der Erfindung verläuft der mindestens eine Zufuhrkanal für Oxidationsmittel im wesentlichen senkrecht zur Durchströmungsrichtung.

Vorteilhafterweise sind mehrere beabstandet zueinander angeordnete Zufuhrkanäle für Oxidationsmittel vorgesehen, wodurch eine über die Querschnittsfläche der Katalysatorschicht gleichmäßige Verteilung des gasförmigen Oxidationsmittels erzielt werden kann.

In vorteilhafter Weiterbildung sind in der Katalysatorschicht mehrere Sammelkanäle für das gasförmige Endprodukt alternierend zu den Zufuhrkanälen für Oxidationsmittel angeordnet. Dadurch entsteht zwischen den Sammelkanälen und den Zufuhrkanälen für Oxidationsmittel ein Misch- und Reaktionsbereich für die exotherme Reaktion. Vorzugsweise verlaufen der mindestens eine Zufuhrkanal für Oxidationsmittel und der mindestens eine Sammelkanal jeweils im wesentlichen senkrecht zur Durchströmungsrichtung und sind im wesentlichen in einer Ebene, die ebenfalls senkrecht zur Durchströmungsrichtung verläuft, angeordnet, was zu einer Verbesserung der Kompaktbauweise beiträgt.

In weiterer vorteilhafter Ausgestaltung erfolgt die Zufuhr des Reaktionsgases durch den mindestens einen Zufuhrkanal für Oxidationsmittel in die Katalysatorschicht im wesentlichen in Durchströmungsrichtung. Vorzugsweise wird das Oxidationsmittel unter einem Winkel von 0° bis etwa 60° zur Durchströmungsrichtung in Richtung der Durchströmung aus dem Zufuhrkanal in die Katalysatorschicht eingeleitet, so daß eine möglichst gute und schnelle Durchmischung des Oxidationsmittels mit dem Zwischenproduktgas erfolgt und zwei Bereiche entstehen können, die nahtlos ineinander übergehen und thermisch gut miteinander gekoppelt sind.

In anderer Ausgestaltung der Erfindung erfolgt die Zufuhr des Oxidationsmittels durch den Zufuhrkanal für Oxidationsmittel in die Katalysatorschicht im wesentlichen senkrecht zur Durchströmungsrichtung, wodurch eine noch kompaktere Bauweise für eine gattungsgemäße Vorrichtung (insbesondere ein Wasserstoffreaktor) erzielbar ist.

Vorzugsweise umfaßt das Reaktionsgemisch Methanol oder anderen chemisch gebundenen Wasserstoff und Wasser sowie gegebenenfalls Sauerstoff. Das Oxidationsmittel umfaßt ebenfalls Sauerstoff. Bei der exothermen Reaktion handelt es sich vorzugsweise um eine Oxidation von bei der Methanol-Reformierung entstandenem Kohlenmonoxid.

Die Erfindung ist anhand zweier Ausführungsbeispiele in der Zeichnung schematisch dargestellt und wird im folgenden unter Bezugnahme auf die Zeichnung näher erläutert.
- Fig. 1: zeigt ein erstes Ausführungsbeispiel einer Katalysatorschicht für eine erfindungsgemäße Vorrichtung in seitlicher Schnittdarstellung.
- Fig. 2: zeigt ein zweites Ausführungsbeispiel einer Katalysatorschicht für eine erfindungsgemäße Vorrichtung in seitlicher Schnittdarstellung.

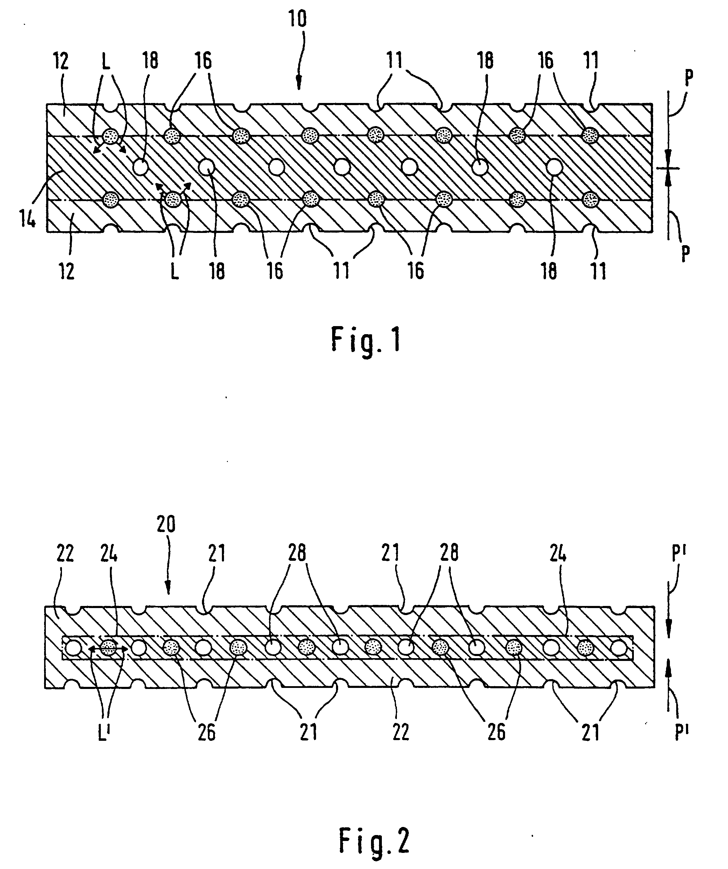

Fig. 1 zeigt in schematischer Schnittdarstellung eine Katalysatorschicht 10 für eine erfindungsgemäße Vorrichtung zur Kombination zweier heterogen katalysierter Reaktionen, beispielsweise einen Reaktor zur Wasserstofferzeugung aus Methanol. Die erfindungsgemäße Vorrichtung läßt sich jedoch auch zur Durchführung von anderen endothermen katalysierten Reaktionen verwenden.

Die Katalysatorschicht 10 umfaßt zwei erste, jeweils an der oberen bzw. unteren Schichtoberfläche angeordnete Bereiche 12, in welchen die (endotherme) Reaktion (hier: Methanol-Reformierung) abläuft. Dazu wird die Katalysatorschicht 10 an der Oberfläche der ersten Bereiche 12 in der durch die Pfeile P angedeuteten Durchströmungsrichtung mit einem Reaktionsgemisch beaufschlagt, das im Falle der Verwendung als Wasserstoffreaktor Methanol und Wasser umfaßt. Zur Beaufschlagung der Katalysatorschicht mit dem Reaktionsgemisch sind an der Oberfläche der Bereiche 12 Reaktionsgemisch-Zufuhrkanäle 11 (Zufuhrkanäle für die Reaktanten der endothermen Reaktion) vorgesehen. Im dargestellten Ausführungsbeispiel sind diese Zufuhrkanäle 11 an der Oberfläche liegend mit halbkreisförmigem Querschnitt ausgebildet. Bei Stapelung mehrerer Katalysatorschichten werden aufeinanderliegende komplementäre Teilkanäle zu Zufuhrkanälen vervollständigt.

An den ersten Bereich 12 (Reformierungsbereich) schließt sich in Durchströmungsrichtung gesehen ein zweiter Bereich 14 an, der zur Durchführung einer exothermen Reaktion designiert ist, indem ein Oxidant-Gasstrom durch im Bereich des Übergangs zwischen den beiden Bereichen 12, 14 vorgesehene Oxidant-Zufuhrkanäle 16 (Zufuhrkanäle für ein gasförmiges Oxidationsmittel) im Sinne der eingezeichneten Pfeile L in den zweiten Bereich 14 zugeführt wird. Dadurch tritt eine Mischung des Kohlenmonoxid enthaltenden Zwischenproduktgases nach Durchströmung des Reformierungsbereiches 12 ein und in dem zweiten Bereich 14 kann mit Zwischenproduktgas und Oxidant-Gasstrom eine exotherme Reaktion ablaufen. Bei dem Oxidant-Gasstrom handelt es sich im vorliegenden Falle um ein Oxidationsgas, insbesondere Luft, so daß der zweite Bereich 14 nachfolgend als Oxidationsbereich bezeichnet wird.

Wie bereits erwähnt, ist ein homogener Übergang zwischen Reformierungsbereich und Oxidationsbereich wesentlich für die Erfindung. Es handelt sich bei den beiden Bereichen 12, 14 insbesondere nicht um separat ausgebildete Teilschichten, die zu einer Katalysatorschicht zusammengefügt werden, sondern um reaktionsbedingt ausgebildete Bereiche in einer Katalysatorschicht.

Die in Fig. 1 zwischen dem Reformierungsbereich 12 und dem Oxidationsbereich 14 eingezeichnete Linie soll daher keine Trennlinie darstellen, sondern nur das Vorhandensein zweier Reaktionsbereiche verdeutlichen.

Etwa in der (in Durchströmungsrichtung im Sinne der Pfeile P gesehenen) Mitte des Oxidationsbereiches 14 sind im wesentlichen parallel zu den Oxidant-Zufuhrkanälen 16 verlaufende Sammelkanäle 18 für das Produktgas vorgesehen. In dem dargestellten Ausführungsbeispiel sind die Sammelkanäle 18 alternierend, d.h. versetzt zu den Oxidant-Zufuhrkanälen 16 angeordnet. Selbstverständlich können die Sammelkanäle 18 auch in Durchströmungsrichtung gesehen in einer Linie mit den Oxidant-Zufuhrkanälen 16 angeordnet sein, oder es kann eine größere Anzahl von Sammelkanälen 18 vorgesehen sein, die sowohl (in Durchströmungsrichtung gesehen) zwischen den Oxidant-Zufuhrkanälen 16 als auch versetzt zu diesen angeordnet sind. Auch andere geometrische Anordnungen als die hier beschriebenen sind möglich.

Zur Verwendung für die Katalysatorschicht 10 sind Katalysatorschichten geeignet, wie sie aus der bereits erwähnten Patentanmeldung mit dem Aktenzeichen 197 43 673.0 bekannt sind. Diese Katalysatorschichten werden als Formkörper durch Verpressen und Sintern von Katalysatorpulver erhalten, das insbesondere Pulver aus dendritischem Kupfer enthält. Die Bereiche 12, 14 werden beispielsweise wie in der Patentanmeldung mit dem Aktenzeichen (198 32 625.4) beschrieben zusammengefügt, was zu sehr homogenen Schichtübergängen mit guter Wärmeleitfähigkeit führt.

Die Katalysatorschicht 10 der Fig. 1 dient zum Aufbau eines aus einer Mehrzahl derartiger Katalysatorschichten 10 bestehenden Stapelreaktors, wie er in der deutschen Patentanmeldung mit dem Aktenzeichen 197 43 673.0 beschrieben ist. Durch die Stapelung werden wie bereits vorstehend erläutert die Zufuhrkanäle 11 gebildet, wobei zur Bildung der Zufuhrkanäle 11 in der oberesten und der untersten Katalysatorschicht eines Stapels dünnere Abschlußelemente vorgesehen sein können, in deren Oberfläche komplementäre Teilkanäle derart ausgebildet sind, daß bei Aufsetzen eines Abschlußelementes auf die oberste oder unterste Katalysatorschicht eines Stapels die Teilkanäle zu Reaktionsgemisch-Zufuhrkanälen vervollständigt werden. Die Reaktionsgemisch-Zufuhrkanäle können jedoch auch in von dem dargestellten Ausführungsbeispielen abweichender Weise in an sich bekannter Art durch die Stützstrukturen des Stapels gebildet werden. Für die Dosierung des Oxidationsgases in den Oxidationsbereich 14 wird vorteilhafterweise ein gesonderter Zuführungskanal in den Stapel eingebracht, der ausschließlich zur Zufuhr des Oxidationsgases zu den einzelnen Katalysatorschichten 10 dient.

Ein weiteres Ausführungsbeispiel der Erfindung ist in Fig. 2 dargestellt. Fig. 2 zeigt eine erfindungsgemäße Katalysatorschicht 20, bei der innerhalb eines ersten Bereiches 22 (Reformierungsbereich) ein zweiter Bereich 24 (Oxidationsbereich) ausgebildet ist, wodurch eine kompaktere Bauweise erzielt wird. Die Zufuhr des Reaktionsgemisches erfolgt wie in dem Ausführungsbeispiel der Fig. 1 mittels Zufuhrkanälen 21, die teilweise in der Oberfläche jeder Katalysatorschicht 20 ausgebildet sind und bei Stapelung vervollständigt werden.

Die Ausbildung des Oxidationsbereiches 24 wird erreicht, indem im Bereich von Sammelkanälen 26 für das Produktgas (vgl. deutsche Patentanmeldung mit dem Aktenzeichen 197 43 673.0) Oxidant-Zufuhrkanäle 26 zur Zufuhr von Oxidationsgas angeordnet sind. In dem in der Fig. 2 dargestellten Ausführungsbeispiel sind die Kanäle 26, 28 alternierend und parallel zueinander in einer Ebene senkrecht zur Duchströmungsrichtung angeordnet.

Das über die Zufuhrkanäle 26 zugeführte Oxidationsgas tritt aus den Zufuhrkanälen 26 aus, so daß in den Abschnitten zwischen und um die Kanäle 26, 28 im Sinne der eingezeichneten Pfeile L' Mischbereiche des aus der Reformierungsschicht 22 stammenden Zwischenproduktgases mit dem Oxidationsgas entstehen, in welchen die CO-Oxidation stattfindet. Für die CO-Oxidation finden insbesondere Edelmetallkatalysastoren, wie beispielsweise Platin oder Palladium Verwendung. Diese den Oxidationsbereich 24 bildenden Misch- und Reaktionsbereiche befinden sich somit im wesentlichen zwischen den Oxidant-Zufuhrkanälen 26 für das Oxidationsgas und den Sammelkanälen 28 für das Produktgas. Durch die Sammelkanäle 28 wird schließlich das gesamte Produktgas der autothermen Reformierung inklusive CO-Oxidation abgeleitet.

Wie durch die Pfeile P' in Fig. 2 angedeutet ist, wird die Katalysatorschicht 20 ebenfalls in beiden Richtungen mit Reaktionsgemisch beaufschlagt. Die wie die Katalysatorschicht 10 der Fig. 1 Grundlage zum Aufbau eines Stapelreaktors bildende Katalysatorschicht 20 der Fig. 2 stellt eine noch kompaktere Bauform dar als die in Fig. 1 dargestellte Katalysatorschicht 10, die jedoch ihrerseits bereits einen wesentlich kompakteren Aufbau eines Stapelreaktors gestattet, als dies aus dem Stand der Technik bekannt ist.

Vorteilhafterweise sind die Katalysatorschichten derart ausgebildet, daß bei Stapelung der Katalysatorschichten senkrecht (also parallel zur Durchströmungsrichtung) verlaufenden Versorgungskanäle für die Zufuhr und Abfuhr von Reaktionsgemisch, Oxidationsgas und Produktgas zu und von den Zufuhrkanälen bzw. Sammelkanälen gebildet werden. Insbesondere vorteilhaft ist eine Ausgestaltung eines Katalysatorstapels mit einer zentralen Hauptzufuhrkanalstruktur und einer entlang des Stapelrandes kreisringförmig ausgebildeten Hauptsammelkanalstruktur.

Erfindungsgemäß wird somit die Abwärme des exothermen Prozesses effektiv für die endotherme Reformierung eingesetzt. Des weiteren entstehen im Bereich der exothermen Reaktion keine überhitzten Zonen, da eine ausreichende Wärmeabfuhr gewährleistet ist. Bei der Durchführung eines Kaltstartes wird die Betriebstemperatur sehr rasch erreicht, wobei zur weiteren Abkürzung der Kaltstartphase sowohl in dem Oxidationsbereich als auch in dem Reformierungsbereich exotherme Reaktionen stattfinden können. Im Standardbetrieb wird dann die Gaszufuhr so geschaltet, daß die endotherme Reformierung im Reformierungsbereich abläuft, wobei zur Erreichung eines autothermen Betriebszustandes im Sinne einer Wärmebilanzregelung auch im Reaktionsgemisch schon Oxidationsgas zugeregelt werden kann, so daß bereits im Reformierungsbereich ein Anteil der partiellen Oxidation erfolgt.

## Patentansprüche

1. Vorrichtung zur Durchführung einer katalytischen endothermen Reaktion und-einer damit thermisch gekoppelten katalytischen exothermen Reaktion, insbesondere einer Reformierung oder partiellen Oxidation von Methanol und einer daran anschließenden CO-Oxidation, mit
a) mindestens einer dünnen, porösen und senkrecht durchströmten Katalysatorschicht (10; 20), an deren Oberfläche verteilt Zufuhrkanäle (11; 21) für die Reaktanten der endothermen Reaktion angeordnet sind,
b) mindestens einem in das Innere der Katalysatorschicht (10; 20) reichenden Zufuhrkanal (16; 26) für ein gasförmiges Oxidationsmittel zur Durchführung einer exothermen Reaktion mit dem Zwischenproduktgas der endothermen Reaktion, und
c) mindestens einem in der Katalysatorschicht (10; 20) angebrachten Sammelkanal (18; 28) für ein gasförmiges Endprodukt.

2. Vorrichtung nach Anspruch 1, bei der der mindestens eine Zufuhrkanal (16; 26) für das gasförmige Oxidationsmittel in Durchströmungsrichtung gesehen etwa in der Mitte der Katalysatorschicht (10; 20) verläuft.

3. Vorrichtung nach Anspruch 1 oder 2, bei der der mindestens eine Zufuhrkanal (16; 26) für das gasförmige Oxidationsmittel im wesentlichen senkrecht zur Durchströmungsrichtung verläuft.

4. Vorrichtung nach einem der Ansprüche 1 bis 3, bei der mehrere beabstandet zueinander angeordnete Zufuhrkanäle (16; 26) für das Oxidationsmittel vorgesehen sind.

5. Vorrichtung nach Anspruch 1 bis 4, bei der mehrere Sammelkanäle (18; 28) für das gasförmige Endprodukt alternierend zu den Zufuhrkanälen (16; 26) für das Oxidationsmittel vorgesehen sind.

6. Vorrichtung nach einem der Ansprüche 1 bis 5, bei der die Zufuhr des gasförmigen Oxidationsmittels in die Katalysatorschicht (10) im wesentlichen in Durchströmungsrichtung erfolgt.

7. Vorrichtung nach einem der Ansprüche 1 bis 5, bei der die Zufuhr des gasförmigen Oxidationsmittels in die Katalysatorschicht (20) im wesentlichen senkrecht zur Durchströmungsrichtung erfolgt.

8. Vorrichtung nach einem der Ansprüche 1 bis 7, bei der mehrere Katalysatorschichten (10; 20) zu einem Stapelreaktor übereinander angeordnet sind.

## Revendications

1. Dispositif pour la réalisation d'une réaction catalytique endothermique et d'une réaction exothermique catalytique couplée thermiquement avec celle-ci, en particulier d'un réformage ou d'une oxydation partielle de méthanol et d'une oxydation de CO subséquente à celle-ci, avec
a) au moins une couche de catalyseur mince, poreuse et parcourue verticalement (10 ; 20), sur la surface de laquelle sont disposés des canaux d'alimentation répartis (11 ; 21) pour les corps réagissants de la réaction endothermique,
b) au moins un canal d'alimentation (16 ; 26) atteignant l'intérieur de la couche de catalyseur (10 ; 20) pour un agent d'oxydation gazeux destiné à réaliser une réaction exothermique avec le produit gazeux intermédiaire de la réaction endothermique, et
c) au moins un canal de recueil (18 ; 28) appliqué dans la couche de catalyseur (10 ; 20) pour un produit gazeux final.

2. Dispositif selon la revendication 1, dans lequel le au moins un canal d'alimentation (16 ; 26) pour l'agent d'oxydation gazeux se trouve dans la direction de l'écoulement à peu près au milieu de la couche de catalyseur (10 ; 20).

3. Dispositif selon la revendication 1 ou 2, dans lequel le au moins un canal d'alimentation (16 ; 26) pour l'agent d'oxydation gazeux est en substance perpendiculaire à la direction de l'écoulement.

4. Dispositif selon l'une quelconque des revendications 1 à 3, dans lequel sont prévus plusieurs canaux d'alimentation (16 ; 26) pour l'agent d'oxydation disposés de manière espacée les uns des autres.

5. Dispositif selon l'une quelconque des revendications 1 à 4, dans lequel plusieurs canaux de recueil (18 ; 28) pour le produit gazeux final sont prévus de manière alternée par rapport aux canaux d'alimentation (16 ; 26) pour l'agent d'oxydation.

6. Dispositif selon l'une quelconque des revendications 1 à 5, dans lequel l'alimentation en agent d'oxydation gazeux dans la couche de catalyseur (10) est réalisée en substance dans la direction de l'écoulement.

7. Dispositif selon l'une quelconque des revendications 1 à 5, dans lequel l'alimentation en agent d'oxydation gazeux dans la couche de catalyseur (20) est réalisée en substance perpendiculairement à la direction de l'écoulement.

8. Dispositif selon l'une quelconque des revendications 1 à 7, dans lequel plusieurs couches de catalyseur (10 ; 20) sont disposées les unes au dessus des autres en un réacteur à empilement.

## Claims

1. Device for carrying out a catalytic, endothermic reaction and a catalytic, exothermic reaction which is thermally connected to it, particularly reforming or partial oxidation of methanol and ensuing CO-oxidation, with
a) at least one thin, porous, catalytic layer (10; 20) which is flowed through vertically, on the surface of which are distributed supply channels (11; 21) for the reactants of the endothermic reaction,
b) at least one supply conduit (16; 26) for a gaseous oxidant for carrying out an exothermic reaction with the intermediate gas of the endothermic reaction, and
c) at least one collection conduit (18; 28), which is introduced into the catalytic layer (10; 20), for a gaseous end product.

2. Device in accordance with claim 1, in which the at least one supply conduit (16; 26) for the gaseous oxidant runs, as seen in the direction of flow, approximately in the centre of the catalytic layer (10; 20).

3. Device in accordance with claim 1 or 2, in which the at least one supply conduit (16; 26) for the gaseous oxidant runs substantially vertically in relation to the direction of flow.

4. Device in accordance with one of claims 1 to 3, in which several spaced supply conduits (16; 26) for the oxidant are provided.

5. Device in accordance with claims 1 to 4, in which several collection conduits (18; 28) for the gaseous end product are provided in an arrangement in which they alternate with the supply conduits (16; 26) for the oxidant.

6. Device in accordance with claims 1 to 5, in which the supply of the gaseous oxidant into the catalytic layer (10) occurs mainly in the direction of through-flow.

7. Device in accordance with one of claims 1 to 5, in which supply of a gaseous oxidant into the catalytic layer (20) occurs mainly vertically in relation to the direction of through-flow.

8. Device in accordance with one of claims 1 to 7, in which several catalytic layers (10; 20) are disposed one on top of another to form a pile reactor.
